(19) Europäisches Patentamt

European Patent Office

Office européen des brevets

(11) Veröffentlichungsnummer: **0 203 252**
**B1**

(12) **EUROPÄISCHE PATENTSCHRIFT**

(45) Veröffentlichungstag der Patentschrift: **13.06.90**

(21) Anmeldenummer: **86100625.2**

(22) Anmeldetag: **18.01.86**

(51) Int. Cl.⁵: **H 02 B 13/02**

(54) **Isoliergasgefüllte, gekapselte Schaltanlage mit einer Anzeigevorrichtung für die Isoliergasdichte innerhalb der Schaltanlage.**

(30) Priorität: **25.05.85 DE 3518932**

(43) Veröffentlichungstag der Anmeldung:
**03.12.86 Patentblatt 86/49**

(45) Bekanntmachung des Hinweises auf die
Patenterteilung:
**13.06.90 Patentblatt 90/24**

(84) Benannte Vertragsstaaten:
**AT BE CH DE FR GB IT LI NL SE**

(56) Entgegenhaltungen:
**EP-A-0 134 187**
**US-A-3 939 412**
**US-A-4 277 746**

(73) Patentinhaber: **Felten & Guilleaume**
**Energietechnik AG**
**Schanzenstrasse 24-30 Postfach 80 50 01**
**D-5000 Köln 80 (DE)**

(72) Erfinder: **Mooz, Dietrich, Dipl.-Ing.**
**Mergelskull 15**
**D-4150 Krefeld (DE)**
Erfinder: **Dirks, Rolf**
**Erlenweg 18**
**D-4156 Willich (DE)**

## Beschreibung

Die Erfindung betrifft eine isoliergasgefüllte, gekapselte Schaltanlage gemäß dem Oberbegriff des Anspruchs 1.

Eine derartige Schaltanlage ist bereits bekannt (EP—A—0 134 187). Innerhalb einer metallgekapselten, druckgasisolierten Hochspannungsschaltanlage sollen mit Hilfe eines kapazitiven Spannungsteilers Teilentladungen festgestellt werden. Die dafür verwendete Meßvorrichtung enthält eine erste Elektrode, die plattenförmig ausgebildet und bündig in die Öffnung der Kapselung eingesetzt ist. Die metallische Kapselung besteht aus einem Zylinder, der einen Innenleiter koaxial umgibt, der als zweite Elektrode fungiert. Die erste Elektrode ist mit einem kegelförmigen Verbindungsteil verbunden, das im Abstand von einem äußeren hohlkegelförmigen Verbindungsteil umgeben ist. Das kegelförmige Verbindungsteil ist über eine koaxiale Meßleitung mit einem Meß- und Anzeigegerät verbunden. Bei dieser Hochspannungsleitung ist für die Meßeinrichtung eine spezielle Anordnung von Flanschen erforderlich, um die zweite Elektrode aufnehmen zu können. Die Meßeinrichtung selbst beschränkt sich darauf, örtlich begrenzte Teilentladungen zu messen.

Es ist ferner eine Meßeinrichtung für die Spannung in einer gekapselten Hochspannungsschaltanlage in der US—A—3 939 412 beschreiben. Ein Innenleiter ist von einem metallenen Außenrohr umgeben. Ein Teil des Außenrohres, der keine Verbindung mit dem übrigen Außenrohr hat, ist als Hilfselektrode ausgebildet, die in einem mit dem übrigen Außenrohr verbundenen Stutzen an eine Meßeinrichtung angeschlossen ist. Diese Meßeinrichtungen bestehen entweder aus elektrischen oder elektro-optischen Geräten. Ihre Aufgabe besteht einzig und allein darin, die Spannung anzuzeigen bzw. zu messen.

Es ist weiterhin eine Schaltanlage mit einer Anzeigevorrichtung für die Isoliergasdichte bekannt (DE—A 28 27 406). Die Anzeigevorrichtung innerhalb der Anlage besteht aus einem hohlräumigen Anzeigeelement, das mit einem gegenüber dem Isoliergas leichteren Gas gefüllt ist. Durch eine Verringerung der Isoliergasdichte wird eine Lageänderung des Anzeigeelements hervorgerufen. Proportional zur abnehmenden Isoliergasdichte wirkt auf das Anzeigeelement eine federelastische Gegenkraft. Mit Hilfe dieser Einrichtung ist es möglich, die jeweils herrschende Isoliergasdichte abzulesen.

Es ist ferner eine einfache, raumsparende Prüfeinrichtung zur Bestimmung der Isoliergasdichte bekannt, bei welcher die Prüfung der Durchschlagsfestigkeit des in der Schaltanlage befindlichen Gases mit Hilfe einer handelsüblichen Zündkerze vorgenommen wird (DE—U 78 26 451). Sowie sich das $SF_6$-Isoliergas in der Schaltanlage verringert, wird die Durchschlagfestigkeit abgesenkt. Die Zündkerze ist hierbei in der Schaltanlage so eingesetzt, daß deren Mittel- und Masseelektrode in die Isoliergasfüllung hineinragt, während die Anschlußelektrode der Zündkerze an einem für das Kontrollpersonal zugänglichen Ort aus der Anlagenkapselung herausragt. Um die Anzeige über das Isoliergas zu erhalten, muß eine Spannung künstlich aufgegeben werden. Wie auch im zuvor geschilderten Fall muß auch hier das Kontrollpersonal sich vor Ort vom Zustand des Isoliergases überzeugen.

Es ist allgemein üblich, bei Druckmessungen Manometer einzubauen, welche allerdings den Nachteil haben, daß der angezeigte Druck von den Außenverhältnissen abhängig ist. Hat die Anlage im Normalfall einen geringen Innerdruck, wie dies bei $SF_6$-Schaltanlagen mit Lasttrennschaltern für Mittelspannung zum großen Teil der Fall ist, so kann bei abgesenkten Temperaturen eine Null-Anzeige erscheinen, obgleich die Anlage noch absolut in Ordnung ist.

Es sind bei $SF_6$-Schaltanlagen auch sogenannte Dichte-Waagen im Einsatz, welche mit einem Schwimmer anzeigen, daß $SF_6$-Gas vorhanden ist. Bekanntlich ist $SF_6$ schwerer als Luft und läßt entsprechend ausgewogene Anzeigeteile schweben, so daß das Vorhandensein von $SF_6$ hierdurch nachgewiesen ist. Allerdings sind diese Anzeigen sehr empfindlich.

Zu erwähnen sind noch Feuchte-Anzeigen, die mit Feuchte-Indikatoren arbeiten und die dann ansprechen, wenn $SF_6$ verlorengegangen und daher feuchte Luft in die Schaltanlage eingedrungen ist. Diese Anzeigen sind jedoch auch nicht zulässig, da das trockene $SF_6$ möglicherweise in trockenen Klimaten durch trockene Luft ersetzt werden kann und daher die Anzeige später kommt als der gefährliche Betriebszustand eingetreten ist.

Der Erfindung liegt die Aufgabe zugrunde, eine Anzeigevorrichtung für eine eingangs geschilderte Schaltanlage zu schaffen, die in der Lage ist, eine Verringerung des Isoliergases innerhalb der Schaltanlage zu melden und dabei gleichzeitig die Antriebe der Schalter zu sperren.

Diese Aufgabe wird erfindungsgemäß durch die im Kennzeichen des Anspruchs 1 angegebenen Merkmale gelöst.

Die mit der Erfindung erzielten Vorteile bestehen darin, daß die erfindungsgemäße Anzeigevorrichtung der zuvor geschilderten Schaltanlage einen Störungsfall ohne Durchführung von Messungen direkt signalisiert. Dies bedeutet eine erhebliche Vereinfachung der Arbeit des Kontrollpersonals.

Zweckmäßige Aus- und Weiterbildungen des Gegenstandes nach Anspruch 1 sind des Unteransprüchen zu entnehmen.

Hierbei erweist es sich als zweckmäßig, daß die Gegenelektrode eine derartige Formgebung aufweist, daß sie bei $SF_6$ als Isoliergas teilentladungsfrei arbeitet, jedoch bei einem bestimmten $SF_6$-Luftgemisch einen Entladungsstrom von der Sammelschiene gegen Erde erzeugt (Anspruch 4).

Dies führt vorteilhafterweise zu einem Einsatz einer Auslöseeinrichtung, wie sie als Auslöser für einen Fehlerstrom-Schutz-schalter bekannt ist (Anspruch 5).

Der Auslöser für einen Fehlerstrom-Schutzschalter besitzt bekanntlich soviel Auslösekraft, daß er ohne weiteres eine Anzeige optischer oder akustischer Art betätigen kann (Ansprüche 6 + 7).

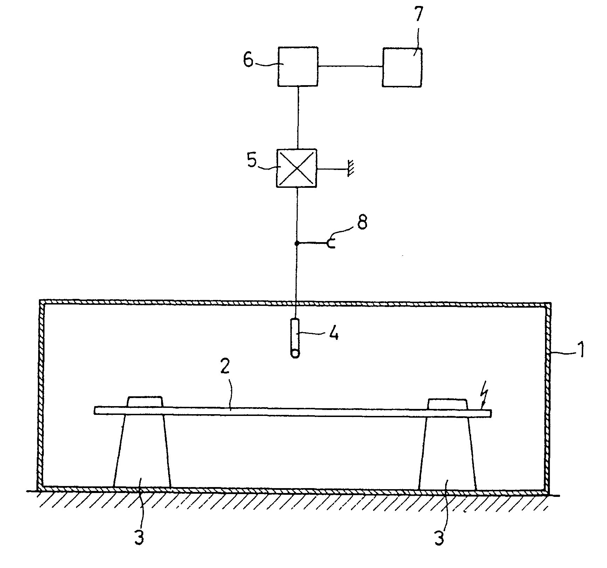

Ein Ausführungsbeispiel der Erfindung ist in einer Zeichnung dargestellt und wird im Folgenden näher erläutert. Es zeigt die Figur eine isoliergasgefüllte, gekapselte Schaltanlage mit einer Anzeigevorrichtung für die Isoliergasdichte.

Nach der Figur besteht die Schaltanlage aus einem gekapselten Gehäuse 1, das mit SF$_6$ als Isoliergas gefüllt ist. Eine unter Spannung stehende Sammelschiene 2 ruht auf zwei Stützern 3, die auf dem Gehäuseboden befestigt sind. In einem bestimmten Abstand ist über der Sammelschiene eine Gegenelektrode 4 angebracht, die mit einer außerhalb der Schaltanlage befindlichen Auslöseeinrichtung 5 verbunden ist. Diese Auslöseeinrichtung ist einerseits geerdet und andererseits an eine Anzeigevorrichtung 6 angeschlossen. Bei dieser Anzeige kann es sich um eine optische oder akustische Einrichtung handeln . Diese Anzeigevorrichtung steht wiederum mit der Verriegelung 7 der Schalterantriebe in Verbindung. Mittels einer Prüf-Testbuchse 8 zwischen der Gegenelektrode und der Auslöseeinrichtung 5 läßt sich die an der Gegenelektrode auftretende Spannung überprüfen.

Die Wirkungsweise der Anzeigevorrichtung ist dergestalt, daß im Normalfall (SF$_6$ zwischen Gegenelektrode und Sammelschiene) kein Teilentladungsstrom fließen kann, da das SF$_6$ eine Funktion als Isoliermittel ausübt. Verschwindet das SF$_6$ und wird durch Luft ersetzt, so wird ein entsprechender Strom auftreten und die zuvor erwähnte Anzeige und/oder Verriegelung betätigen.

## Patentansprüche

1. Isoliergasgefüllte, gekapselte Schaltanlage, mit einem betriebsmäßig spannungsführunden Teil (2), mit einer hierzu in einem bestimmten Abstand angeordneten Gegenelektrode (4) und mit einer Anzeigevorrichtung (6) für die Isoliergasdichte innerhalb der Schaltanlage, dadurch gekennzeichnet, daß die Gegenelektrode (4) mit einer Auslöseeinrichtung (5) derart verbunden ist, daß die Anzeigevorrichtung (6) bei einer Veringerung des Isoliergases ein Signal abgibt und/oder gleichzeitig die Schalterantriebe durch eine Verriegelung (7) blockiert, und daß die Gegenelektrode (4) eine derartige Formgebung aufweist, daß sie bei SF$_6$ als Isoliergas teilentladungsfrei arbeitet, jedoch bei einem bestimmten SF$_6$-Luftgemisch einen Entladungsstrom von dem betriebsmäßig spannungsführenden Teil (2) gegen Erde erzeugt.

2. Schaltanlage nach Anspruch 1, dadurch gekennzeichnet, daß das betriebsmäßig spannungsführende Teil (2) eine Sammelschiene ist.

3. Schaltanlage nach einem der Ansprüche 1 bis 2, dadurch gekennzeichnet, daß die Gegenelektrode (4) an der höchsten Stelle in der Schalanlage angeordnet ist.

4. Schaltanlage nach einem der Ansprüche 1 bis 3, dadurch gekennzeichnet, daß die Auslöseeinrichtung (5) ein Auslöser für einen Fehlerstrom-Schutzschalter ist.

5. Schaltanlage nach einem der Ansprüche 1 bis 4, dadurch gekennzeichnet, daß die Anzeigevorrichtung (6) als Blink- oder Dauerlichtanzeige ausgebildet ist und aus dem Teilentladungsstrom direkt gespeist wird.

6. Schaltanlage nach einem der Ansprüche 1 bis 4, dadurch gekennzeichnet, daß die Anzeigevorrichtung (6) als akustisch wahrnehmbare Einrichtung mit unterbrochener Tonfolge oder Dauerton ausgebildet ist.

7. Schaltanlage nach einem der Ansprüche 1 bis 6, dadurch gekennzeichnet, daß die Spannungsgestigkeit der Isolierstrecke auch nur bei Luft zwischen der Gegenelektrode (4) und der Sammelschiene (2) derart bemessen ist, daß die Betriebsspannung der Schaltanlage in gestörtem Zustand, d.h. bei Luft in der Isolierstrecke, einwandfrei gehalten wird.

8. Schaltanlage nach einem der Ansprüche 1 bis 7, dadurch gekennzeichnet, daß im Leitungszug zwischen der Gegenelektrode (4) und der Auslöseeinrichtung (5) eine von außen zugänglich Prüf-Testbuchse (8) angeordnet ist.

## Revendications

1. Installation de commutation encapsulée, remplie d'un gaz isolant, avec une partie (2) par laquelle est transmise la tension de fonctionnement, avec und contre-électrode (4) disposée à cet effet à une distance déterminée, et avec un dispositif (6) indiquant la densité du gaz isolant à l'intérieur de l'installation de commutation, installation caractérisée en ce que la contre-électrode (4) est reliée à un dispositif de déclenchement (5) de façon que le dispositif indicateur (6) dans le cas d'une diminution du gaz isolant, délivre un signal et/ou simultanément bloque, par un verrouillage (7), l'entraînement de commutation, et en ce que la contre-électrode (4) est conformée de façon telle qu'elle fonctionne sans décharge partielle, lorsque le gaz isolant est du SF$_6$, tandis que pour un mélange SF$_6$-air déterminé, elle engendre un courant de décharge entre la partie (2) transmettant la tension de fonctionnement et la terre.

2. Installation de commutation selon la revendication 1, caractérisée en ce que la partie (2) transmettant la tension de fonctionnement est une barre collectrice.

3. Installation de commutation selon une des revendications 1 ou 2, caractérisée en ce que la contre-électrode (4) est disposée à l'emplacement le plus élevé dans l'installation de commutation.

4. Installation de commutation selon une des revendications 1 à 3, caractérisée en ce que le dispositif de déclenchement (5) est un déclenchement pour un interrupteur de protection contre un courant de défaut.

5. Installation de commutation selon une des revendications 1 à 4, caractérisée en ce que le dispositif indicateur (6) donne une indication lumineuse clignotante ou permanente et est directement alimenté par le courant de décharge partielle.

6. Installation de commutation selon une des revendications 1 à 4, caractérisée en ce que le dispositif indicateur est un dispositif acoustique audible émettant une succession de tonalités intermittentes ou une tonalité continue.

7. Installation de commutation selon une des revendications 1 à 6, caractérisée en ce que la rigidité électrique de la section isolante n'est également déterminée qu'en présense d'air entre la contre-électrode (4) et la barre collectrice (2), de façon que la tension de fonctionnement de l'installation de commutation soit maintenue sans défaillance en présence d'air dans la section isolante.

8. Installation de commutation selon une des revendications 1 à 7, caractérisée en ce qu'une douille d'essai de contrôle (8), accessible de l'extérieur, est disposée sur la liaison entre la contreélectrode (4) et le dispositif de déclenchement (5).

**Claims**

1. An encased switching installation filled with insulating gas, having a part (2) which is live in operation and having an opposite electrode (4) arranged at a certain distance for this purpose and having a device (6) for indicating the density of insulating gas within the switching installation, characterised in that the opposite electrode (4) is connected to a release device (5) in such a way that the indicator device (6) gives out a signal when the insulating gas is diminished and/or at the same time blocks the switch drives by a bar arrangement (7); and in that the opposite electrode (4) is shaped in such a way that it works partially free from discharge like an insulating gas on $SF_6$, yet produces, with a certain $SF_6$-air mixture, a discharge current from the part (2) — which is live in operation — to earth.

2. A switching installation according to Claim 1, characterised in that the part (2) which is live in operation is a bus bar.

3. A switching installation according to any one of Claims 1 to 2, characterised in that the opposite electrode (4) is arranged at the highest point in the switching installation.

4. A switching installation according to any one of Claims 1 to 3, characterised in that the release device (5) is a trigger for a fault-current circuit breaker.

5. A switching installation according to any one of Claims 1 to 4, characterised in that the indicator device (6) is designed as a flashing or a continuous light indicator and is fed directly from the partial discharge current.

6. A switching installation according to any one of Claims 1 to 4, characterised in that the indicator device (6) is designed as an acoustically perceptible device with an interrupted tone sequence or a continuous tone.

7. A switching installation according to any one of Claims 1 to 6, characterised in that the dielectric strength of the insulation space, whenever there is air between the opposite electrode (4) and the bus bar (2) is dimensioned in such a way that the operating voltage of the switching installation is maintained trouble-free when a faulty state is present, i.e. when there is air in the insulation space.

8. A switching installation according to any one of Claims 1 to 7, characterised in that a testing socket (8), accessible from outside, is arranged in the conducting line between the opposite electrode (4) and the release device (5).